**Europäisches Patentamt**

**European Patent Office**

**Office européen des brevets**

(19)

(11) Veröffentlichungsnummer : **0 365 546 B1**

(12) ## EUROPÄISCHE PATENTSCHRIFT

(45) Veröffentlichungstag der Patentschrift :
**02.09.92 Patentblatt 92/36**

(51) Int. Cl.$^5$ : **G01N 3/40**

(21) Anmeldenummer : **88904914.4**

(22) Anmeldetag : **09.06.88**

(86) Internationale Anmeldenummer :
**PCT/DE88/00343**

(87) Internationale Veröffentlichungsnummer :
**WO 88/10416 29.12.88 Gazette 88/28**

(54) **HÄRTEPRÜFGERÄT ZUR HÄRTEPRÜFUNG UNTER LAST.**

(30) Priorität : **23.06.87 DE 3720625**

(43) Veröffentlichungstag der Anmeldung :
**02.05.90 Patentblatt 90/18**

(45) Bekanntmachung des Hinweises auf die
Patenterteilung :
**02.09.92 Patentblatt 92/36**

(84) Benannte Vertragsstaaten :
**CH DE FR GB LI**

(56) Entgegenhaltungen :
**DE-C- 3 504 535**
**FR-A- 2 550 860**
**US-A- 3 572 097**

(73) Patentinhaber : **KRAUTKRÄMER GmbH & Co.**
**Robert-Bosch-Strasse 3**
**W-5030 Hürth 5 (Efferen) (DE)**

(72) Erfinder : **WINCKLER, Immo**
**Rodderbergstr. 15**
**W-5000 Köln 41 (DE)**
Erfinder : **KISING, Jürgen**
**Weisser-Unterkölnweg 4 A**
**W-5000 Köln 50 (DE)**
Erfinder : **WIESE, Andreas**
**Erftweg 32**
**W-5300 Bonn 1 (DE)**

(74) Vertreter : **Bauer, Wulf, Dr.**
**Wolfgang-Müller-Strasse 12**
**W-5000 Köln 51 (Marienburg) (DE)**

**EP 0 365 546 B1**

**Beschreibung**

Die Erfindung bezieht sich auf ein Härteprüfgerät zur Härteprüfung unter Last
– mit mindestens einer Meßsonde in Form eines Handgerätes, das ein griffelähnliches Gehäuse hat, in dem verschiebbar ein stabförmiger Resonator untergebracht ist,

    a) der an seinem freien, aus dem Gehäuse vorstehenden Endbereich eine Meßspitze aufweist,
    b) gegenüber dem Gehäuse über eine Feder abgestützt ist und
    c) mit Ultraschallwandlern verbunden ist, die an einen elektronischen Generator oder an eine Änderungen der Schwingungsdauer bzw. Frequenz des Resonators erfassenden Empfängerschaltung angeschlossen sind und

– mit einem Grundgerät, das eine Anzeigeeinheit aufweist und über eine Verbindungsleitung mit der Meßsonde verbunden ist.

Bei dem aus der US-Patentschrift 35 72 097 bekannten Resonanzverfahren zur Härteprüfung, das häufig als UCI-(Ultrasonic Contact-Impedance)-Verfahren bezeichnet wird, wird ein stabförmiger Resonator mit Hilfe von piezoelektrischen Ultraschallwandlern zu Eigenschwingungen in longidutinaler Richtung angeregt. Dabei wird ein Stab der Länge 1 bei 1/4 festgelegt, wodurch sich nur die erste Oberschwingung ausbilden kann. Der Stab hat an seinem unteren, freien Endbereich einen Eindringkörper aus Diamant. Bei elastischer Kopplung dieses Systems mit einer Masse findet eine Verschiebung der Resonanzfrequenz der Resonators zu höheren Werten statt, da eine zusätzliche Rückstellkraft auf das schwingende System wirkt. Die Größe dieser Rückstellkraft und damit die genannte Verschiebung sind von der Kontaktfläche zwischen Eindringkörper und Testkörper und deren elastischem Verhalten abhängig.

Im einzelnen ist die Frequenzänderung eine Funktion der Kontaktfläche, der Elastizitätsmoduli des Diamanten bzw. Testkörpers, der Poissonzahlen des Diamanten bzw. Testkörpers und der Resonanzfrequenz des Resonators. Sind die Elastizitätsmoduli und Poissonzahlen nicht bekannt, kann das vorbekannte Härteprüfgerät mit Hilfe einer Vergleichsplatte vorbekannter Härte kalibriert werden. Dann sind Messungen an Werkstücken, deren elastische Konstanten sich nur wenig von denen der Härtevergleichsplatte abweichen, möglich. Es ist dann nur noch bei bekannter Resonanzfrequenz die Messung der Frequenzverschiebung notwendig. In der Praxis hat sich gezeigt, daß unlegierte und niedrig ligierte Stähle weitgehend übereinstimmende Elastizitätsmoduli bzw. Poissonzahlen haben, so daß das Kalibrierverfahren sich für derartige Stähle eignet.

Das Härteprüfgerät der eingangs gennanten Art ist aus dem Zeitschriftenartikel "VDI-Bericht Nummer 583/1986, Seite 371 bis 391", bekannt. Bei diesem Kleinlast-Härteprüfer befinden sich alle elektronischen Teile, insbesondere der für die Anregung des Resonators vorgesehene elektronische Generator und die elektronische Empfängerschaltung, im Grundgerät. Jedem Grundgerät ist nur eine Sonde zugeordnet, Sonde und Grundgerät sind dabei aufeinander abgestimmt. Ein Austausch einer bestimmten Sonde gegen eine andere Sonde ist nur möglich, wenn das Grundgerät neu kalibriert wird. Dies ist nachteilig. Für Messungen bei unterschiedlichen Prüfdrucken werden allgemein mehrere Härteprüfgeräte benutzt, da ein Austausch der Sonden aufgrund der notwendigen Nachkalibrierung zu viel Zeit beansprucht. Andererseits haben Versuche, die Sonden so präzise zu fertigen, daß sie gegeneinander austauschbar sind, gezeigt, daß die stets auftretenden Produktionsabweichungen nur mit unverhältnismäßig hohen Mitteln beherrschbar sind und eine wirtschaftliche Lösung auf diesem Wege nicht erhalten werden kann.

Bei dem vorbekannten Härteprüfgerät der eingangs genannten Art ist die zwischen dem stabförmigen Resonator und dem Gehäuse der Meßsonde angeordnete Feder als Zugrollfeder ausgebildet. Derartige Federn sind einerseits voluminös, andererseits teuer. Die Zugrollfeder bestimmt im wesentlichen die Abmessungen der Meßsonde.

Aus der deutschen Patentschrift 33 29 690 ist ein Verfahren und eine Vorrichtung zur Vereinfachung der Härtemessung nach der Kontakt-Impedanz-Methode bekannt. Hierbei werden während eines ersten Zeitbereichs die Schwingungen des frei schwingenden stabförmigen Resonators und während eines zweiten Zeitbereichs gleicher Dauer wie der erste Zeitbereich die Schwingungen des an ein Werkstück angekoppelten Resonators ausgezählt. Während des zweiten Zeitbereichs werden die Schwingungen des an das Werkstück angekoppelten Resonators nur so lange gezählt, bis sich aus der Subtraktion dieses Zählwertes und dem Zählwert der während des ersten Zeitbereichs gezählten Schwingungen der Differenzwert Null ergibt, während der restlichen Dauer des zweiten Zeitbereichs werden die Schwingungen mit einer fest vorgegebenen Periodendauer ausgezählt. In einem Ausführungsbeispiel wird als Dauer des ersten Zeitbereichs 355 ms angegeben.

Aus der deutschen Patentschrift 35 04 535 ist ein Verfahren zur Ermittlung der Härte fester Körper bekannt, das im wesentlichen mit einer Vorrichtung durchgeführt wird, wie sie auch aus dem genannten VDI-Bericht ersichtlich ist. Bei dem Verfahren wird jedoch keine Frequenzdifferenz bestimmt, sondern die Amplitude des stabförmigen Resonators bei mechanischer Kopplung mit dem Prüfstück bestimmt und aus dem Quadrat der Amplitudenwerte die Härte des Prüfstücks ermittelt.

Ausgehend von dem Härteprüfgerät der eingangs genannten Art hat sich die Erfindung nun die Aufgabe gestellt, die Nachteile des vorbekannten Härteprüfgerätes der eingangs genannten Art zu vermeiden und unter Beibehalt, möglichst Verringerung der Größe der Meßsonde das Härteprüfgerät dahingehend weiterzubilden, daß eine Vielzahl von Meßsonden nacheinander an ein und dasselbe Grundgerät angeschlossen werden kann und Sonden an verschiedenen Grundgeräten betrieben werden können.

Ausgehend von dem Härteprüfgerät der eingangs genannten Art wird diese Aufgabe durch das Härteprüfgerät nach Anspruch 1 gelöst und insbesondere dadurch, daß im Gehäuse der Messonde ein Speicher für die Speicherung individueller Parameter des stabförmigen Resonators, der elektrische Generator und ein Schalter für die Auslösung des (empfangsseitigen) Meßvorgangs für die Schwingungsdauer der Resonators, der ein auf die Position des verschiebbaren Resonators reagierendes Auslöseelement hat, angeordnet sind, und daß die Feder eine Schraubenfeder ist.

Bei diesem Härteprüfgerät sind die für Kalibrierung benötigten Daten im Speicher enthalten, der vorzugsweise nicht flüchtig ist, also eine permanente Speicherung ermöglicht (beispielsweise E²-Prom). Auf diese Weise hat jede einzelne Sonde die für sie typischen Merkmale in sich selbst, nämlich in ihrem Speicher, aufbewahrt, so daß die umständliche Nachkalibrierung zur Anpassung der individuellen Sondenparameter an das Auswertegerät entfällt. Zu einem Grundgerät können mehrere Sonden, die für verschieden Materialien kalibriert oder für verschiedene Prüfdrucke ausgelegt sind, auf Vorrat gehalten werden. Da auch der anregende Sender in der Messonde selbst untergebracht ist, wird sein Einfluß auf die Kalibrierung unbeachtlich und auf diese Weise die Austauschbarkeit individueller Messonden deutlich verbessert. Grundsätzlich ist es aber möglich, in einer verschlechterten Ausführung den elektronischen Generator im Grundgerät zu belassen. Dies führt dann nicht zu Schwierigkeiten, wenn man nur mit einem Grundgerät arbeitet. Will man aber mehrere Grundgeräte verwenden, so ist es für einen problemlosen Austausch sehr vorteilhaft, wenn in jeder Messonde der speziell für den jeweiligen stabförmigen Resonator ausgelegte elektronische Generator vorhanden ist.

Wenn allgemein von den individuellen Parametern des stabförmigen Resonators gesprochen wird, so sind hierunter nicht nur die Parameter lediglich des nackten Resonatorstabes zu verstehen, sondern auch die Parameter der an ihm angebrachten Ultraschallwandler, die individuelle Ausbildung der Verbindung dieser Ultraschallwandler mit dem eigentlichen Stab, die konkreten Verhältnisse der Halterung des Resonanzstabes im Gehäuse usw. zu verstehen.

Im Grundgerät ist Mikrorechner vorgesehen, der mittels der in den einzelnen Speichern der Messonden enthaltenen Informationen, unter Berücksichtigung konstanter Parameter und der gemessenen Frequenzverschiebung bzw. Periodendauer das Maß der Härte errechnet, das über die Anzeigeeinheit von einem Benutzer abgelesen werden kann. Die einzelnen Messonden sind für unterschiedliche Prüfkräfte ausgelegt, typische Prüfkräfte liegen bei 2, 5, 10, 20 und 50 N.

Aufgrund des Einsatzes einer Schraubenfeder anstelle einer Zugrollfeder kann die Meßsonde des erfindungsgemäßen Härteprüfgerätes noch kleiner, insbesondere mit geringerem Durchmesser als das vorbekannte Härteprüfgerät, ausgebildet werden. Zugleich erreicht man durch die Schraubenfeder höhere Prüfkräfte. Während bei Zugrollfedern federbedingt die Prüfkraft unter 10 N bleiben muß, kann er bei Einsatz einer Schraubenfeder höher gewählt werden, beispielsweise 50 N betragen. Zusätzlich können zwei unterschiedliche Zylinderfedern hintereinander angeordnet werden und gemeinsam die Feder bilden. So kann beispielsweise eine weichere Feder eingesetzt werden die zunächst dafür sorgt, daß die Aufsetzkraft der Messonde insbesondere bei Handbetrieb nicht zu hoch und damit der Diamant nicht beschädigt wird. Ist die erste, relativ weiche Feder komprimiert, setzt die zweite, härtere Feder ein, die dann die Prüfkraft vorgibt.

Nachteilig bei Einsatz einer Schraubenfeder ist jedoch, daß die Federkraft vom Federweg abhängt, während bei einer Zugrollfeder die Zugrollkraft weitgehend wegunabhängig ist. Um nun sicherzustellen, daß stets bei einer festen Prüfkraft gearbeitet wird, ist im Gehäuse der Messonde ein Schalter für die Auslösung des empfangsseitigen Meßvorgangs angeordnen, der ein auf die Position des verschiebbaren, stabförmigen Resonators reagierendes Auslöseteil hat. Beim Meßvorgang wird die Meßsonde zunächst auf die Oberfläche des Testkörpers aufgelegt und langsam die Anlagekraft erhöht. Dabei komprimiert sich die Feder, der Resonator wird in das Gehäuse der Messonde hineinbewegt. Hat er eine Position erreicht, die der vorgewählten Prüfkraft entspricht, wird das Auslöseteil betätigt und damit der Schaltvorgang ausgelöst. Auf diese Weise ist sichergestellt, daß stets bei einer vorgegebenen Prüfkraft gemessen wird. Durch Verschieben der Position des Auslöseteils kann die Prüfkraft der Sonde verändert werden.

Sehr vorteilhaft hat es sich insbesondere im Zusammenhang mit der soeben beschriebenen Anordnung eines Schalters herausgestellt, die Empfangselektronik auf eine kurzzeitige Messung, z. B. 20 ms, auszulegen. Für derartige, in relativ kurzer Zeit erfolgende Messungen ist es vorteilhafter, die Periodendauer der Schwingung und nicht die Frequenz zu messen. Aufgrund der relativ kurzzeitigen Meßdauer für die Bestimmung der Schwingungsdauer ist das Meßergebnis weitgehend unabhängig von der zeitlichen Konstanz der Prüfkraft während der eigentlichen Meßzeit. Das erfindungsgemäße Härteprüfgerät eignet sich dadurch sehr vorteilhaft für den Handbetrieb. Insbesondere kann es manuell erfaßt und auf den Testkörper gedrückt werden, wobei der Benutzer einen Hinweis, beispielsweise aufgrund der erfolgten Anzeige oder über ein akustisches Signal dafür erhält, daß er die vorgegebenen Prüfkraft hat und die Messung durchgeführt werden konnte. Die Messonde kann aber auch in einem Stativ geführt werden und von einem Benutzer gegen den Testkörper gedrückt werden. Die erfindungsgemäße Messonde eignet sich auch für den Einsatz in Maschinen, beispielsweise Robotern.

Schließlich hat es sich als vorteilhaft erwiesen, in einer Weiterbildung den stabförmigen Resonator so auszubilden, daß er sich ausgehend von seinem im Inneren des Gehäuses der Messonde befindlichen Endbereich zum freien Endbereich hin verjüngt, insbesondere schrittweise verjüngt. Je dünner der Resonator ausgebildet ist, umso größer ist die Frequenzverschiebung bei Berührung mit einem Testkörper. Andererseits ist es bei einem relativ dünnen, stabförmigen Resonator schwierig, ausreichend große, also eine nicht zu kleine Oberfläche aufweisende Ultraschallwandler anzubringen. Hier schlägt die Erfindung nun vor, den stabförmigen Resonator an seinem freien, aus dem Gehäuse ragenden freien Endbereich mit einem kleineren Querschnitt auszubilden, als er am anderen Endbereich, wo die Ultraschallwinger angeordnet sind, aufweist. Das Querschnittsverhältnis liegt vorzugweise oberhalb von eins zu zwei. Auf diese Weise ist einerseits der Stab am inneren Endbereich ausreichend dick, um hinreichend große Ultraschallwandler befestigen zu können. Je größer die Wandler sind, umso größer ist auch die Empfindlichkeit des Resonators, da die Resonanzamplitude mit dem Durchmesser wächst. Andererseits wird durch den relativ kleinen Durchmesser, z. B. Durchmesser 1 mm, am unteren Ende erreicht, daß neben der schon erwähnten, größeren Frequenzveränderung, die eine höhere Meßgenauigkeit zur Folge hat und damit insbesondere für eine kurzzeitige Messung Vorteile bringt, die möglichen Applikationen des erfindungsgemäßen Härteprüfgerätes erheblich erweitert werden. Aufgrund der sehr geringen Abmessungen im Prüfbereich, also im Bereich des Diamanten, ist es möglich, Messungen an Zahnflanken und an unzugänglichen Stellen, die mit dem vorbekannten Härteprüfgerät nicht zu erreichen waren, durchzuführen. Beispielsweise lassen sich auch Schweißnähte, relativ kleine Rohre an ihrer Innenwand und konkave Oberflächenbereiche prüfen.

Schließlich ist es noch vorteilhaft, den als Prüfkörper dienenden Diamanten in einem Halter anzuordnen, der lösbar am freien Ende des Resonators befestigt ist. Bei Beschädigung des Diamanten kann dieser ohne größere Probleme, möglicherweise sogar von Anwender, ausgetauscht werden.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:

Fig. 1 Eine Prinzipdarstellung des erfindungsgemäßen Härteprüfgerätes mit einer Messonde, deren Gehäuse durch das gestrichelte Viereck angedeutet ist, und einem mit einer numerischen Anzeigeeinheit versehenen Grundgerät, eine Verbindungsleitung ist eingezeichnet,

Fig. 2 einen Längsschnitt durch eine Messonde eines Härteprüfgerätes nach der Erfindung,

Fig. 3 ein Detailbild aus Fig. 2, gezeigt ist der vollständige Resonanzstab,

Fig. 4 eine teilweise schnittbildlich ausgeführte Seitenansicht des stabförmigen Resonators und

Fig. 5 ein Schnittbild entlang der Schnittlinie V - V in Fig. 4.

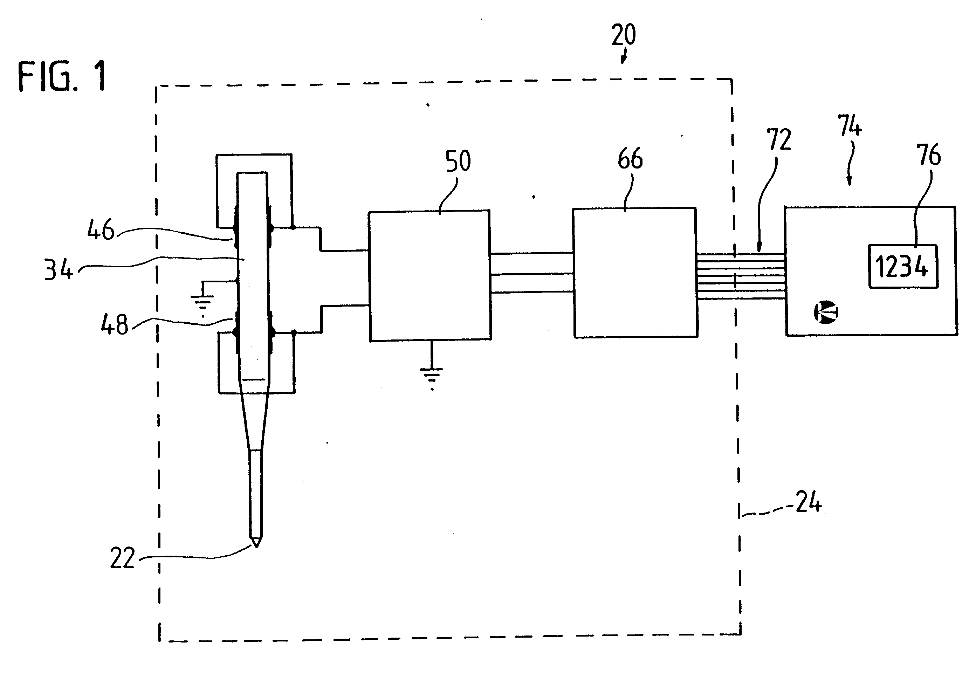

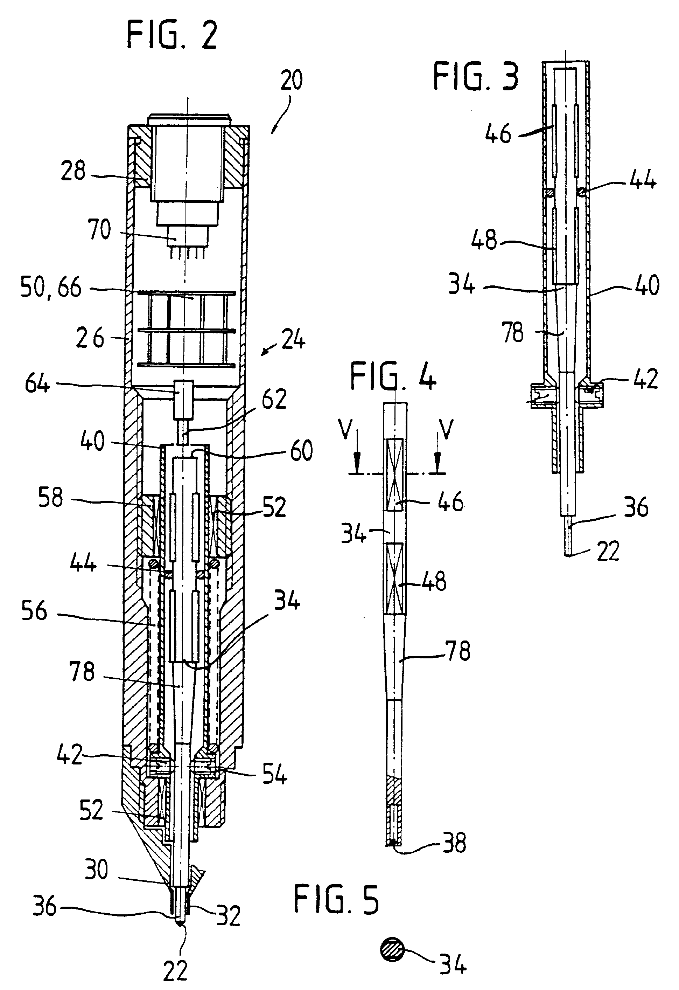

Das Härtprüfgerät zur Härteprüfung unter Last hat mindestens eine Messonde 20, die ein griffelähnliches, im wesentlichen zylindrisches und sich zu einer Prüfspitze 22 hin verjüngendes Gehäuse 24 hat. In Fig. 1 ist das Gehäuse durch ein gestrichelt eingezeichnetes Rechteck angedeutet, das Gehäuse selbst ist aus Fig. 2 im einzelnen ersichtlich. Danach besteht es im wesentlichen aus einem außen zylindrischen, innen aber abgestuften Rohrkörper 26, in den am oberen Ende ein Deckel 28 eingesetzt ist und der nach unten durch eine teilweise konische, auf ein Gewinde des Rohrkörpers 26 aufschraubbare Hülse 30 verlängert werden kann, falls mit Abstandsröhrchen 32 gearbeitet werden soll.

Im Inneren des Gehäuses 24 ist ein stabförmiger Resonator 34 verschiebbar gelagert. Er ragt im Normalfall etwas, beispeilsweise 15 % seiner Gesamtlänge, frei aus dem unteren Ende des Rohrkörpers 26 hinaus. Ist die Hülse 30 aufgeschraubt, so bleibt nur noch der die Prüfspitze 22 bildende Diamant einschließlich seine stabförmigen Halters 36 sichtbar. Dieser Halter hat einen Durchmesser von 1 mm und ist beispeilsweise 8 mm lang. Er ist in einen nach unten offenen Schlitz 38 des Resonators 34 eingesetzt, so daß Halter 36 und Prüfspitze 22 ausgetauscht werden können.

Der Resonator 34 ist innerhalb des Rohrkörpers 26 von einem Führungsrohr 40 umgeben. Im unteren Bereich bildet es Gewinde aus, dort ist der Resonator 34 mittels Fixierschrauben 42 eingespannt. In entsprechender Entfernung vom inneren Ende des Resonators 34 ist ein O-Ring 44 zwischen Führungsrohr 40 und Resonator 34 eingelegt. Beidseitig dieses O-Ringes 44 sind Paare von Ultraschallwandlern in entsprechenden Ausnehmungen des Resonators 34 (siehe Fig. 5) an diesem befestigt. Die zwischen dem O-Ring 44 und dem inneren freien Ende angeordneten Ultraschallwandler 46 sind einem Generator 50 elektrisch verbunden und dienen der Anregung des Resonators 34. Die näher der geometrischen Mitte des Resonator 34 und auf der anderen Seite des O-Ringes 44 vorgesehenen Ultraschallwandler 48 sind mit einer hier nicht näher dargestellten Empfängerschaltung elektrisch verbunden. Diese ist so ausgelegt, daß die Periodendauer der mechanischen Schwingungen des Resonators 34 erfaßt und an einen ebenfalls nicht dargestellten Mikrorechner weitergegeben wird.

Das Führungsrohr 40 wird von zwei zylinderringförmigen Gleitlagern 52 umgriffen, von denen sich ein erstes im unteren Endbereich des Rohrkörpers 26 befindet. Oberhalb dieses Gleitlagers 52 vergrößert sich der Innendurchmesser des Rohrkörpers 26, um Platz für die Aufnahme der Fixierschrauben 42 zu schaffen. Der zugehörige Bereich der Führungsrohres 40 dient zugleich als unterer Anschlag und damit Wegbegrenzer des Führungsrohres 40 (einschließlich des Resonators 34) nach unten, der Anschlag erfolgt an einer inneren Stufe 54. Auf der Gegenseite zur Stufe 54 stützt sich eine Zylinderfeder 56 an den Aufnahmen für die Fixierschrauben 42 ab. Sie hat einen nur unwesentlich größeren Innendurchmesser, als der Außendurchmesser des Führungsrohres 40 beträgt und liegt oben an einer hülsenförmigen Stellschraube 58 an, die an ihrem Innenmantel mit dem zweiten Gleitlager 52 verbunden ist. Ihr Außenmantel hat ein Außengewinde, das mit einem Innengewinde an der Innenwand des Rohrkörpers 26 in Eingriff steht und von oben, also der Seite des Deckels 28, eingeschraubt werden kann.

Der Resonator 34 ist insgesamt etwa 55 mm lang. Sein inneres Ende 60 befindet sich etwa auf mittlerer Länge des Rohrkörpers 26. Der typische Hub des Resonators 34 mit seinem Führungsrohr 40 liegt bei etwa 1,5 mm. In der Figur 2 ist die entspannte Position des Resonators 34 gezeigt. In dieser Stellung befindet sich ein Auslöseelement 62 eines zentrisch angeordneten Schalter 64 in freiem Abstand vom Ende 60. Wird der Resonator 34 einschließlich seines Führungsrohres 40 jedoch durch Aufsetzen der Prüfungsspitze 22 auf einen (nicht dargestellten) Testkörper nach innen in das Gehäuse 24 gedrückt, so kommt das Ende 60 in mechanischen Kontakt mit dem Auslöseelement 62, der Schalter 64 wird hierdurch betätigt und die Messung ausgelöst.

Der Schalter 64 kann auch anders als bisher dargestellt ausgeführt sein: So kann er beispielsweise als Nährungsschalter, als Softwareschalter, als Lichtschranke, als Berührungsschalter oder dergleichen ausgeführt werden. Vorteilhaft ist, wenn der Schalter 64 bzw. sein Auslöseelement 62 nicht selbst den Weg des Resonators 34 nach oben hin begrenzt.

Zwischen Schalter 64 und Deckel 28 hat der Rohrkörper 26 des Gehäuses 24 seine geringste Wandstärke. In diesem Bereich ist die Sondenelektronik angeordnet, sie hat einen jeweils in Figur 1 angegebenen, in Fig. 2 aber nicht näher dargestellten Speicher 66 und Generator 50. Die Sonnenelektronik ist mit Kontakten eines Steckverbinders 70 verbunden, der von dem Deckel 28 umgriffen und von der oberen Stirnseite des Gehäuses 24 zugänglich ist. An ihm wird mittels eines zweiten, nicht dargestellten Steckverbinders eine Verbindungsleitung 72 lösbar angeschlossen, die Fig. 1 dargestellt ist. Sie verbindet die Messonde 20 mit einem Grundgerät 74, in dem eine Anzeigeeinheit 76, die hier numerisch ausgeführt ist, und ein (nicht dargestellter) Mikrorechner untergebracht sind. Die Anzeige des jeweils gemessenen Härtewertes erfolgt unmittelbar im Anschluß an die Messung mittels der Anzeigeenheit 76.

Der Resonator 34 ist ausgehend von seinem Ende 60 zunächst auf etwa 50 Prozent seiner Gesamtlänge zylindrisch, er hat im Ausführungsbeispiel einen Durchmesser von 3 mm. Anschließend geht er in einem stumpfkegligen Bereich 78 in einen zweiten zylindrischen Bereich über, dessen Länge etwa 32 Prozent der Gesamtlänge beträgt und in dem der Schlitz 38 ausgeführt ist.

Die im Speicher 66 abgespeicherten Daten berücksichtigen die individuellen Eigenschaften der gesamten Schwingstabanordnung. Sie werden halbautomatisch durch Dreipunktjustierung und mittels genormter Prüfplatten ermittelt. Für diese Justierung kann entweder der im Grundgerät 74 vorgesehene Mikrorechner herangezogen werden, oder sie kann mittels eines zusätzlichen Rechners erfolgen.

## Patentansprüche

1. Härteprüfgerät zur Härteprüfung unter Last
   – mit mindestens einer Messonde (20) in Form eines Handgerätes, das ein griffelähnliches Gehäuse (24) hat, in dem verschiebbar ein stabförmiger Resonator (34) untergebracht ist,
      a) der an seinem freien, aus dem Gehäuse vorstehenden Endbereich eine Meßspitze (22) aufweist,
      b) gegenüber dem Gehäuse (24) über eine Feder (56) abgestützt ist und
      c) mit Ultraschallwandlern (46, 48) verbunden ist, die an einen elektronischen Generator (50) und eine Änderungen seiner Schwingungsdauer bzw. Frequenz erfassenden Empfängeschaltung angeschlossen sind, und
   – mit einem Grundgerät (74), das eine Anzeigeeinheit (76) aufweist und über eine Verbindungsleitung (72) mit der Messonde (20) verbunden ist,
   dadurch gekennzeichnet, daß im Gehäuse (24) der Messonde (20) ein Speicher (66) für die Speicherung individueller Parameter des stabförmigen Resonators (34) und der elektronische Generator (50) angeordnet sind, und daß das Grundgerät (74) lösbar mit der mindestens einen Messonde (20) verbindbar ist.

2. Härteprüfgerät nach Anspruch 1, dadurch gekennzeichnet, daß es unterschiedliche, jeweils für eine vorgegebene Prüfkraft, z. B. 2, 10, 50 N, ausgelegte Messonden (20) aufweist.

3. Härteprüfgerät nach Anspruch 1 oder 2, dadurch gekennzeichnet, daß im Gehäuse der Messonde (20) ein Schalter (64) für die Auslösung des empfangsseitigen Meßvorgangs für die Schwingungsdauer des Resonators (34) angeordnet ist, der ein auf die Position des verschiebbaren Resonators (34) reagierendes Auslöseelement (62) hat.

4. Härteprüfgerät nach einem der Ansprüche 1 bis 3, dadurch gekennzeichnet, daß die Empfangselektronik auf eine kurzzeitige Messung, z. B. eine Messung innerhalb von 20 ms, der Schwingungsdauer des Resonators (34) ausgelegt ist.

5. Härteprüfgerät nach einem der Ansprüche 1 bis 4, dadurch gekennzeichnet, daß die Feder (56) eine Schraubenfeder ist.

6. Härteprüfgerät nach einem Ansprüche 1 bis 5, dadurch gekennzeichnet, daß mehrere, hintereinander angeordnete und unterschiedliche Federkonstanten aufweisende Federn (56) vorgesehen sind.

7. Härteprüfgerät nach einem der Ansprüche 1 bis 6, dadurch gekennzeichnet, daß der stabförmige Resonator (34) an seinem freien, mit der Prüfspitze (22) verbundenen Endbereich einen kleineren Querschnitt, vorzugsweise runden Querschnitt, aufweist als an seinem anderen Ende (60), wobei das Querschnittsverhältnis vorzugsweise größer als 1 : 2 ist.

8. Härteprüfgerät nach Anspruch 7, dadurch gekennzeichnet, daß der Resonator (34) über etwa die Hälfte seiner Gesamtlänge zylindrisch mit einem größeren Durchmesser ist, hieran anschließend in einem stumpfkegligen Bereich (78) auf einen zylindrischen Bereich mit kleinerem Durchmessen übergeht, und daß dieser zweite zylindrische Bereich etwa 32 % der Gesamtlänge des Resonators (34) ausmacht.

9. Härteprüfgerät nach Anspruch 7 oder 8, dadurch gekennzeichnet, daß der Resonator (34) an seinem der Prüfspitze (22) benachbarten Endbereich einen Schlitz (38) aufweist und/oder daß die Prüfspitze (22) mit einem Halter (36) verbunden ist, der lösbar mit dem freien Ende des Resonators (34) verbindbar ist.

10. Härteprüfgerät nach einem der Ansprüche 7 bis 9, dadurch gekennzeichnet, daß der Resonator (34) über den größten Teil seiner Gesamtlänge von einem Führungsrohr (40) umgriffen wird, daß Aufnahmen für Fixierschrauben (42) ausbildet sind, die einerseits mit einer Stufe (54) zusammenwirken und an denen andererseits sich die Feder (56) abstützt.

**Claims**

1. An apparatus for testing hardness under load comprising
   – at least one measuring sensor (20) in the form of a manual apparatus having a pencil-like housing (24) in which a mobile rod-shaped resonator (34) is slidingly inserted, which resonator
      a) has at its free end, which protrudes beyond the housing, a measuring tip (22); and
      b) is held against the housing (24) by a spring (56); and
      c) is fitted with ultrasonic transducers (46, 48) that are connected to an electronic generator (50) and to a receiving circuit which records changes in the duration or, respectively, the frequency of the vibrations of the resonator, and
   – a basic apparatus (74) that is fitted with a display element (76) and that is connected via a connecting line (72) to the measuring sensor (20),
   characterized in that both a memory (66) for storing individual parameters of the rod-shaped resonator (34) and the electronic generator (50) are arranged in the housing (24) of the measuring sensor (20), and the basic apparatus (74) is connected by a detachable connection with at least one of the measuring sensors (20).

2. Apparatus as set forth in claim 1, characterized in that for any one given testing force (for example 2, 10, 50 N) various measuring sensors (22) are available.

3. Apparatus as set forth in claim 1 or 2, characterized in that a switch (64) for triggering the (receiver side) measuring process of the duration of vibration of the resonator (34) is sited in the housing of the measuring sensor (20) and has a triggering element (64) that reacts to the position of the moveable resonator (34).

4. Apparatus as set forth in one of the claims 1 to 3, characterized in that the receiver electronic is designed for measuring over a short time span - for example within 20 ms - the duration of vibration of the resonator (34).

5. Apparatus as set forth in one of the claims 1 to 4, characterized in that the spring (56) is a coil spring.

6. Apparatus as set forth in one of the claims 1 to 5, characterized in that several springs (56) that have varying spring tensions are incorporated, being arranged one behind the other.

7. Apparatus as set forth in one of the claims 1 to 6, characterized in that the rod-shaped resonator (34) reveals on its free end, which end is connected to the measuring tip (22), a preferably round cross-section that is smaller than the cross-section at its other end (60, the cross-section ratio being preferably greater than 1 to 2.

8. Apparatus as set forth in claim 7, characterized in that the resonator (34) is cylindrical over approximately half of its total length, which cylindrical section has a greater diameter, and changes via a bluntly spherical section to a cylindrical section with a smaller diameter, this second cylindrical section comprising approximately 32 % of the total length of the resonator (34).

9. Apparatus as set forth in claim 7 or 8, characterized in that the resonator (34) has on its end area that borders on the measuring tip (22) a slit (38) and/or that the measuring tip (22) is connected with a holder (36) which is connected - via a detachable connection - to the free end of the resonator (34).

10. Apparatus as set forth in one of the claims 7 to 9, characterized in that the resonator (34) is surrounded over most of its length by a guiding tube (40), which guiding tube reveals inserts for fixing screws (42) which on the one side cooperate with a step (54) and on the other side provide support for the screw (56).

**Revendications**

1. Duromètre pour contrôler la dureté sous charge, comprenant
   – au moins une sonde de mesure (20) sous la forme d'un appareil tenu à la main, possédant un boîtier (24) semblable à un crayon, dans lequel un résonateur (34) en forme de barreau est logé mobile en translation, résonateur qui
   a) présente une pointe de mesure (22) sur sa partie extrême libre, dépassant du boîtier,
   b) est appuyé par un ressort (56) vis-à-vis du boîtier (24) et
   c) est relié à des transducteurs ultrasoniques (46, 48) raccordés à un générateur électronique (50) et un circuit récepteur détectant des changements de la durée d'une vibration du résonateur, ou détectant sa fréquence, et
   – un appareil de base (74) comportant une unité d'affichage (76) et relié par une ligne de connexion (72) à la sonde de mesure (20),
   caractérisé en ce qu'une mémoire (66) pour la mémorisation de paramètres individuels du résonateur (34) en forme de barreau et le générateur électronique (50) sont disposés dans le boîtier (24) de la sonde de mesure (20) et que l'appareil de base (74) peut être relié de façon détachable à au moins une sonde de mesure (20).

2. Duromètre selon la revendication 1, caractérisé en ce qu'il comprend différentes sondes de mesure (20) conçues chacune pour une force de contrôle préfixée (par exemple pour 2, 10, 50 N).

3. Duromètre selon la revendication 1 ou 2, caractérisé en ce que le boîtier de la sonde de mesure (20) contient un interrupteur (64) pour déclencher le processus de mesure (côté réception) pendant la durée d'une vibration du résonateur (34), interrupteur qui possède un élément de déclenchement (62) réagissant à la position du résonateur (34) mobile en translation.

4. Duromètre selon une des revendications 1 à 3, caractérisé en ce que l'électronique de réception est conçue pour une mesure de courte durée, par exemple une mesure en moins de 20 ms, correspondant à la durée d'une vibration du résonateur (34).

5. Duromètre selon une des revendications 1 à 4, caractérisé en ce que le ressort (56) est un ressort hélicoïdal.

6. Duromètre selon une des revendication 1 à 5, caractérisé en ce qu'il comporte plusieurs ressorts (56) placés l'un derrière l'autre et ayant des constantes de ressort différentes.

7. Duromètre selon une des revendications 1 à 6, caractérisé en ce que le résonateur (34) en forme de barreau présente une plus petite section droite, de préférence circulaire, dans sa partie extrême libre, reliée à la pointe de contrôle (22), qu'à son autre extrémité (60), le rapport des sections droites étant de préférence supérieur à 1 : 2.

8. Duromètre selon la revendication 7, caractérisé en ce que le résonateur (34) possède une forme cylindrique avec un diamètre relativement grand sur la moitié environ de sa longueur totale et se raccorde ensuite par une partie tronconique (78) à une partie cylindrique de plus petit diamètre, et que cette deuxième partie cylindrique représente environ 32% de la longueur totale du résonateur (34).

9. Duromètre selon la revendication 7 ou 8, caractérisé en ce que le résonateur (34) présente une fente (38) dans sa partie extrême voisine de sa pointe de contrôle (22) et/ou que la pointe de contrôle (22) est reliée à un support (36) pouvant être attaché de façon amovible à l'extrémité libre du résonateur (34).

10. Duromètre selon une des revendications 7 à 9, caractérisé en ce que le résonateur (34) est entouré sur la majeure partie de sa longueur totale par un tube guide (40) formant des réceptions pour des vis de fixation (42) qui coopèrent d'une part avec un épaulement (54) et sur lesquelles s'appuie d'autre part le ressort (56).

FIG. 1

EP 0 365 546 B1

FIG. 2

FIG. 3

FIG. 4

FIG. 5